# EUROPÄISCHE PATENTANMELDUNG

(11) **EP 3 158 983 A1**
(43) Veröffentlichungstag der Anmeldung: **26.04.2017**
(21) Anmeldenummer: 15003022.9
(22) Anmeldetag: 22.10.2015
(51) Int. Cl.: A61G 5/02, A61G 5/10, A61G 5/06

(54) **ADAPTIVES VORSATZRAD FÜR ROLLSTÜHLE**

(71) Anmelder: Drummer, Christian, 91356 Kircherenbach (DE)
(72) Erfinder: Drummer, Christian, 91356 Kirchehrenbach (DE); Herrmann, Dominik, 91362 Pretzfeld (DE)

(57) **Zusammenfassung**

Die Erfindung betrifft ein Adaptives Vorsatzrad für Rollstühle, als Einheit aus einem Rad (5), Rahmensegmenten (1), Adaptionsschalen (7,8) zur seitlichen Führung an den Rollstuhlvorderrohren und mindestens einem am Rollstuhl befestigbarem Aufnahmeelement (6) gebildet, so dass beim Anbringen des adaptiven Vorsatzrades am Rollstuhl die Adaptionsschalen (7,8) mit den Rollstuhlvorderrohren zusammengeführt werden, dessen vordere Lenkrollen vom Boden abgehoben werden und ein Rollstuhldreirad entsteht, dessen vorderes Rad (5) mittels Einhandlenkung (13) zu steuern und bremsen ist.

## Beschreibung

Die Erfindung betrifft ein abnehmbares adaptives Vorsatzrad, das den Einsatzbereich des sonst sehr eingeschränkten Rollstuhls erweitern soll. Dieses wird durch eine Einheit aus einem Vorsatzrad, Rahmensegmenten und mindestens einem am Rollstuhl befestigtem Aufnahmeelement gebildet, so dass beim Anbringen des adaptiven Vorsatzrades am Rollstuhl dessen vordere Lenkrollen vom Boden abgehoben werden und ein Rollstuhldreirad entsteht.

Bereits bekannt sind Rollstuhlvorsatzräder mit faltbarem Rahmen, welche über mechanische Aufnahmeelemente befestigt werden. Andere mit starrem Rahmen, bei denen die Befestigung über eine Steckverbindung hergestellt wird. Außerdem gibt es Rollstuhlfahrräder, welche ohne Anbauteile am Rollstuhl z.B. durch verschraubbare Klemmbacken befestigt werden können.

Derartige Ausführungen sind aus
DE 10 2007 014 533 B3,
DE 100 28 338 C2,
DE 101 02 855 C1,
DE 200 07 793 U1,
DE 41 07 410 C2,
EP 0911 010 A2
bekannt.

Nach bisherigem Stand der Technik sieht es so aus, dass es für Rollstuhlfahrer schwer ist, die meist schweren und großen Ausführungen mit Lenkung und Bremse selbständig anzubringen oder zu transportieren. Kleinere Ausführungen, die dieses Handhabungsproblem lösen, verfügen jedoch nicht über aktive Fahreigenschaften wie beispielsweise Bremse und Lenkung, wodurch das Fahren erschwert und verunsichert wird. Zudem sind auch häufig schwere und platzintensive Anbauteile am Rollstuhl notwendig, durch die dessen Handhabung im alltäglichen Gebrauch erschwert wird.
Der Erfindung liegt die Aufgabe zu Grunde, ein adaptives Vorsatzrad nach eingangs genannter Gattung derart auszubilden, dass der Rollstuhlbenutzer dieses leicht selbständig anbringen und zudem leicht transportieren kann. Außerdem soll das Befahren von Schlechtweg-Strecken vereinfacht werden. Die Antriebsenergie soll durch direktes, verzögerungsfreies Lenken erhalten bleiben um seitlich geneigte Wege mit möglichst geringem Kraftaufwand bewältigen zu können, so dass keine Antriebsenergie zum Lenken aufgebracht werden muss. Die Tendenz des Rollstuhls sich hangabwärts auszurichten soll demnach verhindert werden. Beim Bergab-Fahren entsteht beim konventionellen Verzögern des Rollstuhls viel Reibung zwischen den Händen und den Greifringen, was zu einem raschen Temperaturanstieg der Handflächen führt und viel Kraft erfordert. Eine am Vorderrad befindliche Felgenbremse löst dieses Problem und soll außerdem mit der konventionellen Verzögerung kombinierbar sein.
Des weiteren sollen die Vorraussetzung für eine hochgradige Anpassbarkeit an die Bedürfnisse des Nutzers und die verschieden ausgeführten Rollstuhlrahmentypen vorliegen. Die am Rollstuhl angebrachten Aufnahmeelemente sollen in möglichst kleiner und leichter Form ausgeführt sein.
Das bedeutet, dass durch dieses neue Vorsatzrad ein Produkt geschaffen werden soll, welches der Rollstuhlfahrer völlig selbständig und unabhängig von anderen Personen mit seinem Auto transportieren kann, leicht anbringen kann und somit auf verschiedenen Wegen (zum Beispiel auch auf Wanderwegen, Wiesen, Sand, Schotter, Bergauf, Bergab, Schräglagen) aktiv, sicher und ohne Hilfe mit Lenkung und Bremse fahren kann.
Diese Aufgaben werden durch die in den Ansprüchen genannten Merkmale gelöst.

Vor dem Anbringen des adaptiven Vorsatzrades am Rollstuhl werden die Aufnahmeelemente in gleicher Höhe an dessen Rollstuhlvorderrohre geklemmt. Um in die Funktionsposition zu gelangen, wird das auf dem Boden stehende Vorsatzrad zunächst mit den oberen Adaptionsschalen in die Aufnahmeelemente gesteckt. Durch das um die Rollstuhlvorderrohre zu legende Spannelement werden nun mit Hilfe eines Spannmechanismus die unteren Adaptionsschalen der Rahmensegmente mit den Rollstuhlvorderrohren zusammengeführt, wobei sich die Lenkrollen des Rollstuhls vom Boden abheben.
Es ist vorteilhaft, die Aufnahmeelemente als zweiteiligen Ring mit einer Nut auszuführen, in welche die oberen Adaptionsschalen eingesteckt werden können und einrasten, um eine spielfreie und tragfähige Verbindung zwischen Rollstuhl und Vorsatzrad zu gewährleisten sowie die Montage und das Anbringen zu erleichtern.

Es ist vorteilhaft, die um den Rollstuhlrahmen zu legenden Spannelemente mit einer weichen Oberfläche auszuführen, um Beschädigungen am Rollstuhlrahmen zu vermeiden.

Es ist vorteilhaft, wenn der Spannmechanismus zum spannen des Spannelements über eine Rastfunktion verfügt, welche verhindert, dass sich die Befestigung von selbst löst.

Es ist vorteilhaft, wenn die Adaptionsschalen dreh- und schwenkbar ausgeführt sind um die Anpassbarkeit an verschiedene Rollstuhlrahmentypen und die Parallelität beider vertikaler Gelenke als geometrische Bedingung für die Ausführung der Hebefunktion mittels Spannmechanismus zu erreichen.

Es ist vorteilhaft, wenn das Innenmaß der Adaptionsschalen an das Außenmaß der Rollstuhlvorderrohre anpassbar ist und eine weiche Oberfläche besitzt.

Es ist vorteilhaft, wenn zwei Rahmensegmente vorhanden sind, welche über Drehgelenke am Steuerrohr symmetrisch horizontal schwenkbar sind, um die Adaption an unterschiedlichen Rahmenbreiten zu ermöglichen und das Packmaß klein zu halten.

Es ist vorteilhaft, wenn das Rahmensegment einen teleskopisch verstellbaren Innenholm mit Versatz aufweist, an dessen Ende eine Adaptionsschale befestigt ist, um die Adaption an verschiedene Rahmentypen zu ermöglichen.

Es ist vorteilhaft, wenn der Radaufstandspunkt hinter dem Schnittpunkt der verlängerten Lenkachse und dem Boden liegt.

Es ist Vorteilhaft, wenn die Lenkung eine verstellbare Schwergängigkeit sowie eine zusätzliche Mittelstellung aufweist, um die Spurtreue zu gewährleisten. Dies ist vor allem beim beidhändigen Antreiben des Rollstuhls von Vorteil, da ein Schlingern des Vorderrades bei Schlechtweg-Strecken verhindert wird.

Es ist vorteilhaft, den Lenker mit Bremse für den Einhandbetrieb auszulegen sowie ihn zur physischen Anpassbarkeit höhen- und längenverstellbar auszuführen.

Im Folgenden wird die Erfindung anhand der in den Zeichnungen dargestellten Ausgestaltung genauer beschrieben. Hierbei sei jedoch klargestellt, dass es sich um eine beispielhafte Ausgestaltung handelt, von der im Rahmen der Ansprüche Abweichungen möglich sind.
Fig. 1 zeigt Gesamtansicht einer beispielhaften Ausgestaltung der erfindungsgemäßen Vorsatzradadaption
Fig. 2 zeigt Draufsicht der in Fig. 1 gezeigten Vorsatzradadaption im Packmaß
Fig. 3 zeigt Draufsicht der Einheit ohne Lenker
Fig. 4 zeigt Schnittansicht von Steuerrohr und Lenkervorbau
Fig. 5 zeigt Explosionsansicht von Steuerrohr und Lenkervorbau
Fig. 6 zeigt Schnittansicht eines Adaptionsrings
Fig. 7 zeigt perspektivische Ansicht der oberen Adaptionsschalen mit Gelenken
Fig. 8 Zeigt perspektivische Ansicht der unteren Adaptionsschalen mit Gelenken
Fig. 9 Zeigt Seitenansicht des Einhandlenkers
Fig. 10 Zeigt in Seitenansicht die Anfangs- und End-/Funktionsposition beim Befestigen der Vorsatzradadaption am Rollstuhl.

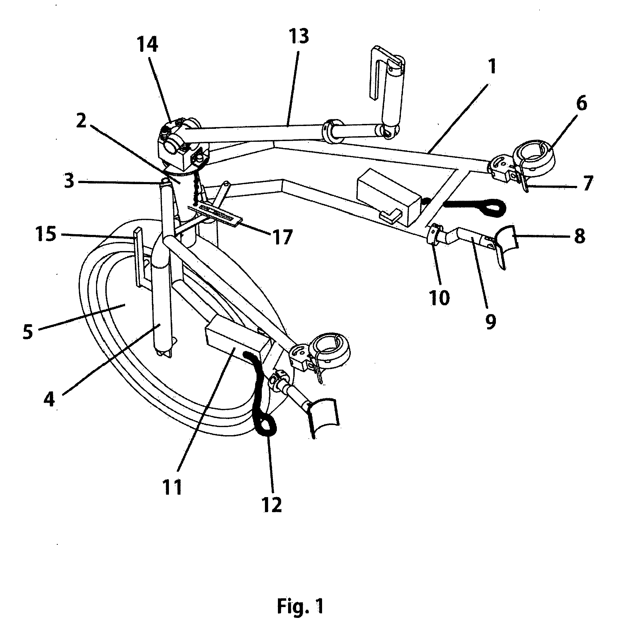

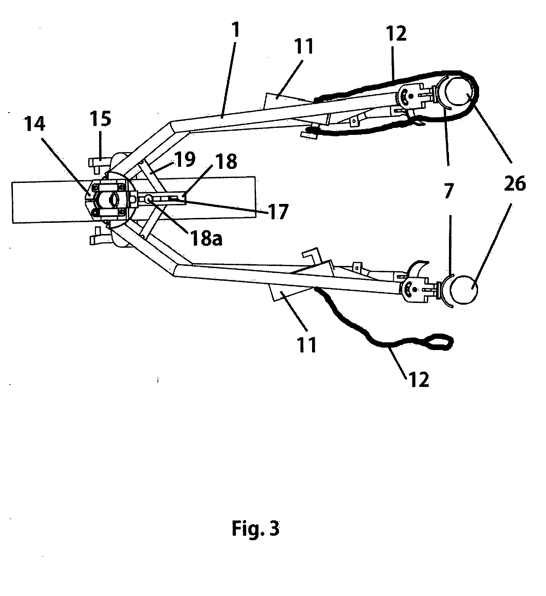

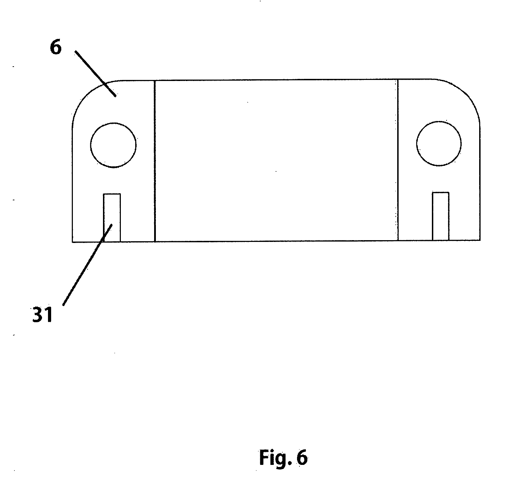

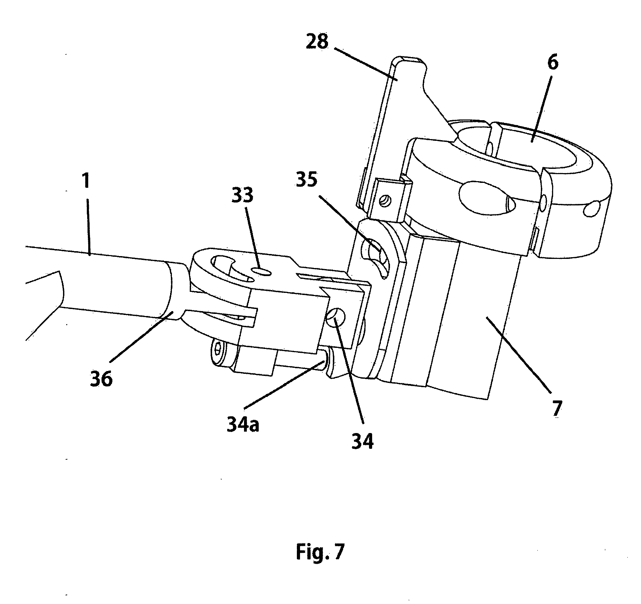

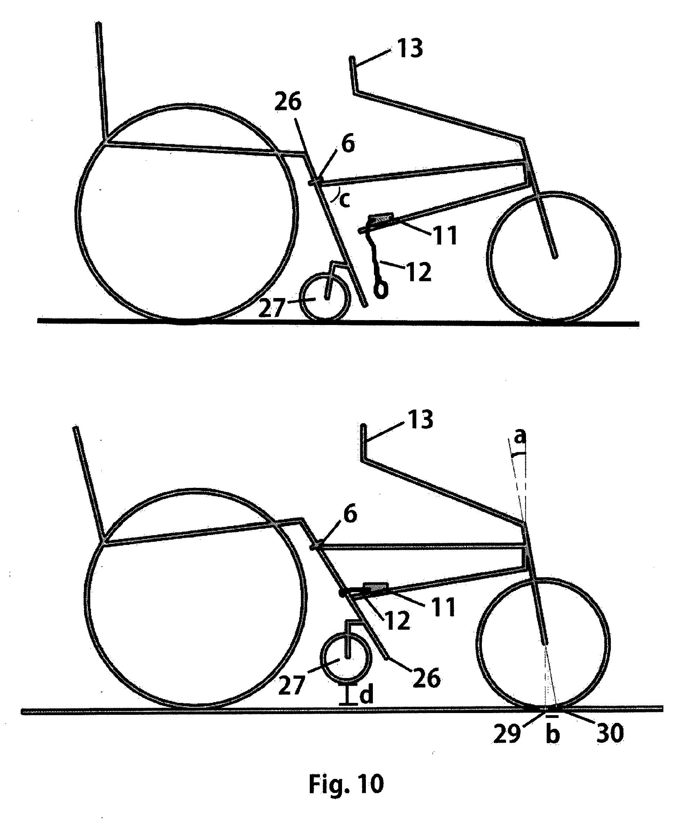

Die Ausgestaltung (Fig.1) besteht aus einem rechten und einem linken Rahmensegment (1), welche mittels Gelenken (3) am Steuerrohr (2) befestigt sind. In Verbindung mit dem arretierbarem Schermechanismus (17+18+19, Fig.3) ergibt sich ein symmetrischer in der Breite stufenlos einstellbarer Dreiecksrahmen, für unterschiedliche Rollstuhlsitzbreiten. Um eine maximale Anpassbarkeit zu gewährleisten ist jede der oberen Adaptionsschalen (7) über ein Horizontalgelenk (33, Fig.7), ein Vertikalgelenk (34) und ein Rotationsgelenk (35) mit dem jeweiligen Rahmensegment (1) verbunden. Die Adaptionsringe (6) werden im oberen Bereich auf gleicher Höhe an die Rollstuhlvorderrohre (26, Fig.10) geklemmt. Weitere Veränderungen des Rollstuhls sind nicht erforderlich. Die obere Adaptionsschale (7) weist einen Haken (28, Fig.7) auf, welcher beim Einführen der Adaptionsschale in den Adaptionsring (6, Fig.1+Fig.6) auf diesem einrastet, so das Vorsatzrad am Rollstuhl fixiert und hierdurch den weiteren Adaptionsvorgang erleichtert.

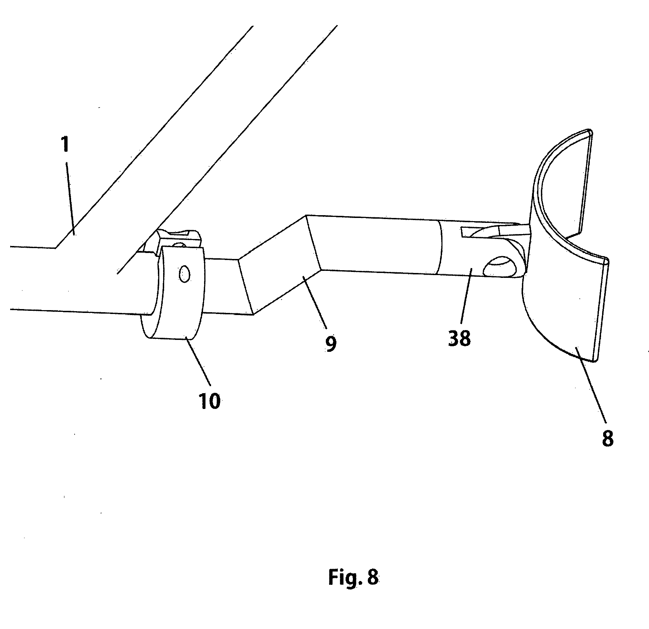

Die unteren Adaptionsschalen (8, Fig.8) sind drehbar mit den Versatzrohren (9) verbunden, welche als Innenrohr teleskopisch verstellbar und drehbar im Unterrohr des Rahmensegments (1) geführt und über Klemmung (10) arretiert werden. Diese Verstellbarkeit ermöglicht eine Anpassung des Vorsatzrahmens an Rollstühle mit unterschiedlichen Vorderrohrwinkeln sowie an Sonderformen wie beispielsweise Adduktionsrahmen.
An jedem Rahmensegment (1) befindet sich ein Spannmechanismus (11) mit einem Spannelement aus Textilgurt mit endseitiger Schlaufe (12), die am Rahmensegment (1) eingehängt wird. Um die Funktionsposition (Fig.10 unten) zu erreichen, werden die oberen Adaptionsschalen (7) in die Nuten der Adaptionsringe (31, Fig.6) eingesteckt, die an den Spannmechanismen (11) befestigten Spannelemente (12) um die Rollstuhlvorderrohre (26, Fig.3+10) geführt, an den Rahmensegmenten (1) eingehängt und mit dem Spannmechanismus (11) gespannt. Bei diesem Vorgang nähern sich die unteren Adaptionsschalen (8) bis auf Formschluss an die Rollstuhlvorderrohre (26, Fig.10) an, wodurch die Lenkrollen des Rollstuhls vom Boden abgehoben werden (d, Fig.10).

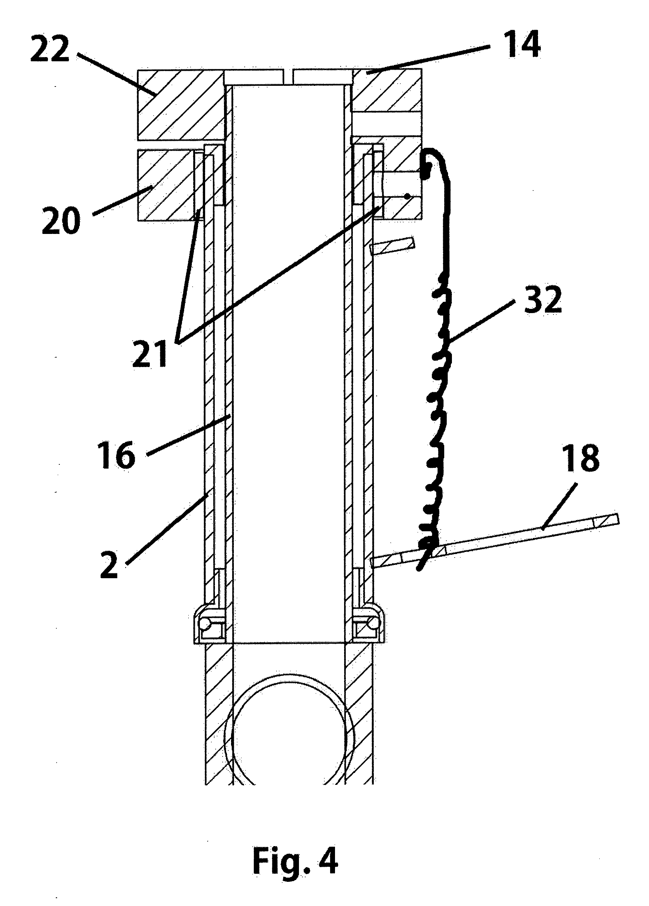

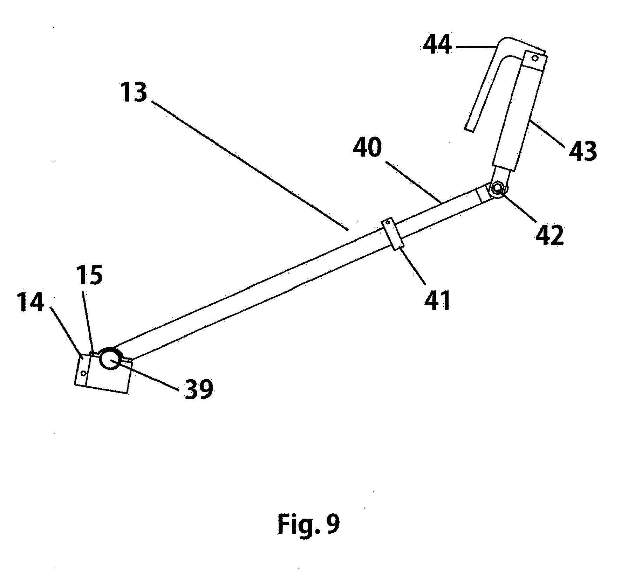

Das Vorsatzrad (Fig.1) verfügt über ein brems- und lenkbares Rad (5), welches mit einer einhändig bedienbaren Lenkung (13 + Fig.9) mit Bremse (44, Fig.9) ausgestattet ist. Diese Lenkung zeichnet sich durch zwei arretierbare Gelenke (39+42, Fig.9) zur Winkeleinstellung und einem Teleskopmechanismus (40+41, Fig.9) zur Längenanpassung aus. Durch diese Funktionen wird eine maximale Anpassbarkeit der Lenk- und Bremsbedienung an den Benutzer erzielt. Der Lenkervorbau (14 + Fig4) ist an seiner unteren Hälfte mit einem Reibring (21, Fig.4) ausgestattet, welcher mittels einer Einstellklemme (20) gegen die Aussenseite des Steuerrohrs (2) gepresst werden kann, wodurch ein einstellbarer Lenkwiderstand entsteht. Eine zwischen Lenkervorbau (14) und Steuerrohr (2) befestigte Feder (32) sorgt für einen federzentrierten Geradeauslauf des Vorderrades. Des weiteren wird durch zwei Anschläge (24) am Steuerrohr und einem am Lenkervorbau (14) eine Einschränkung des Lenkeinschlags erreicht. Das Vorderrad verfügt zudem über eine gerade Radgabel (4) und einen Lenkwinkel (a, Fig.10), diese bewirken, dass der Radaufstandspunkt (29, Fig.10) in Fahrtrichtung hinter dem Schnittpunkt (30, Fig.10) der verlängerten Lenkachse und dem Boden liegt.

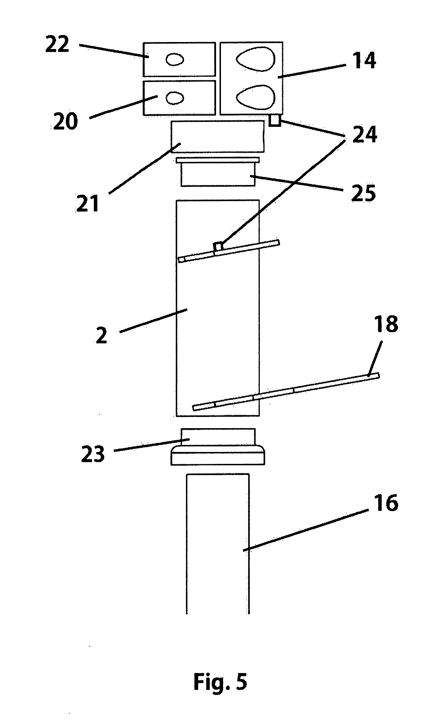

Die Funktionen federzentrierter Geradeauslauf & Lenkwiderstand (32+20, Fig. 5) in Verbindung mit dem eben genannten positiven Nachlauf (b, Fig. 10) bewirken einen stabilisierten Geradeauslauf und ein dem Rollstuhlfahrer vertrautes Lenkverhalten bei beidhändigem Antrieb der Einheit über die Rollstuhlgreifringe. Bei Bergabfahrten und Kurven kann das Vorderrad (5, Fig.1) direkt und bequem über die Einhandbedienung (13, Fig.1) gelenkt und gebremst werden. Diese Eigenschaften erhöhen die Fahrsicherheit, reduzieren den nötigen Kraftaufwand und ermöglichen eine effizientere Fortbewegung. Durch den Dreiecksrahmen mit arretierbarem Schermechanismus (17+18+19, Fig.3) und einstellbaren Adaptionsschalen (Fig.7+Fig.8) entsteht eine äußerst Anpassungsfähige Rahmenkonstruktion die dennoch eine hohe Steifigkeit aufweist. Nach einmaligem Einstellen (18a, Fig.3 und 33+35+34a, Fig.7) besteht der Vorteil einen schnellen Wechsel zwischen Transport-und Funktionsmodus des Vorsatzrades durchzuführen und dieses so schnell und flexibel zu handhaben.

Diese Ausführung ist für Rollstuhlfahrer von hohem Nutzen, da sie wesentliche Handhabungsprobleme löst und so einen bisher nicht bekannten Mobilitätsgewinn bewirkt.

### Bezugszeichenliste

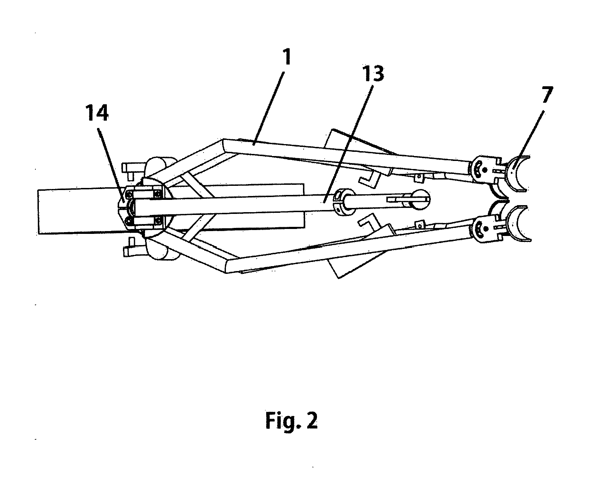

**Fig. 1****:** Perspektivische Gesamtansicht "Vorsatzradadaption mit Adaptionsring"
   1 Rahmensegment
   2 Steuerrohr
   3 Steuerrohrdrehgelenk
   4 Radgabel
   5 Rad
   6 Adaptionsring
   7 obere Adaptionsschale
   8 untere Adaptionsschale
   9 Rohrversatz
   10 Klemmung Rohrversatz
   11 Spannmechanismus
   12 Spannelement mit Schlaufe
   13 Einhandlenker
   14 Lenkervorbau
   15 V-Bremse
   17 Schermechanismus
**Fig. 2****:** Draufsicht "Einheit im Packmaß"
   1 Rahmensegment
   7 obere Adaptionsschale
   13 Einhandlenker
   14 Lenkervorbau
**Fig. 3****:** Draufsicht "Einheit ohne Lenker"
   1 Rahmensegment
   7 obere Adaptionsschale
   11 Spannmechanismus
   12 Spannelement mit Schlaufe
   14 Lenkervorbau
   15 V-Bremse
   17 Schermachanismus
   18 Schermechanismus Führungsschiene
   18a Schermachanismus fixierbarer Rasthalter
   19 Schermechanismus Arm
   26 Rollstuhlvorderrohr
**Fig. 4****:** Schnittansicht Lenkervorbau und Steuerrohr
   2. Steuerrohr
   14 Lenkervorbau
   16 Gabelschaft
   18 Schermechanismus Führungsschiene
   20 Einstellklemme Lenkwiderstand
   21 Reibring
   22 Gabelschaftklemmung
   32 Rückstellfeder
**Fig. 5****:** Explosionszeichnung Lenkervorbau und Steuerrohr
   2 Steuerrohr
   14 Lenkervorbau
   20 Einstellklemme Lenkwiderstand
   21 Reibring
   22 Gabelschaftklemmung
   23 Untere Lagerschale
   24 Lenkanschlag
   25 Gleitlager Steuerrohr
**Fig. 6****:** Schnittansicht Adaptionsring
   6 Adaptionsring
   31 Nut für Adaptionsschalen
**Fig. 7****:** perspektivische Ansicht "obere Adaptionsschale mit Gelenken" + Adaptionsring
   1 Rahmensegment
   6 Adaptionsring
   7 obere Adaptionsschale
   28 Haken
   33 arretierbares Horizontalgelenk
   34 Vertikalgelenk
   34a Schwenkbereichsbegrenzung Vertikalgelenk
   35 arretierbares Rotationsgelenk
   36 Verbindungsstück
**Fig. 8****:** perspektivische Ansicht "untere Adaptionsschale mit Gelenken"
   1 Rahmensegment
   8 untere Adaptionsschale
   9 Rohrversatz
   10 Klemmung Rohrversatz
   38 drehbares Gelenkverbindungsstück
**Fig. 9****:** Seitenansicht "Einhandlenker"
   13 Einhandlenker
   14 Lenkervorbau
   39 Lenker Höhenverstellung
   40 Teleskoprohr
   41 Teleskoprohrklemmung
   42 arretierbares Griffgelenk
   43 Griff
   44 Bremshebel
**Fig. 10****:** Darstellung "Adaptionsvorgang"
   6 Adaptionsring
   11 Spannmechanismus
   12 Spannelement
   13 Einhandlenker
   26 Rollstuhlvorderrohr
   27 Lenkrollen
   29 Radaufstandspunkt
   30 Schnittpunkt verlängerte Lenkachse mit dem Boden
   a Steuerrohrwinkel
   b Nachlauf
   c Spannwinkel
   d Lenkrollenanhebung

## Patentansprüche

1. Einheit aus einem adaptivem Vorsatzrad mit einem Rad (5) und aus Aufnahmeelementen (6, 7) zur einfachen Befestigung an verschiedenen Rollstuhlrähmen, wobei bei der Befestigung die Vorderräder des Rollstuhls vom Boden abgehoben werden und ein Rollstuhldreirad entsteht, **dadurch gekennzeichnet, dass** das Vorsatzrad ein Steuerrohr (2) und zwei Rahmensegmente (1) aufweist, welche mit ihren ersten Enden am Steuerrohr befestigt sind und an deren zweiten Enden mindestens drei Adaptionsschalen (7, 8) befestigt sind, wobei die Öffnung jeder Adaptionsschale (7, 8) vom zweiten Ende des Rahmensegments weg weist, und dass mindestens ein am Rollstuhlvorderrohr befestigbarer Adaptionsring (6) vorgesehen ist, welcher eine an die Form einer der Adaptionsschalen (7) angepasste Nut (31) zum Einführen der Adaptionsschale (7) enthält, wobei mindestens eine der weiteren Adaptionsschalen (7, 8) mittels eines an einem der zwei Rahmensegmente (1) befestigten Spannmechanismus (11) an das Rollstuhlvorderrohr gespannt werden kann, wobei durch die Form der weiteren Adaptionsschale eine seitliche Führung am Rollstuhlvorderrohr entsteht.

2. Einheit nach Anspruch 1, **dadurch gekennzeichnet, dass**
mindestens eine der Adaptionsschalen (7, 8) in schwenk-, rotier- oder teleskopierbarer Ausführung am Rahmensegment (1) befestigt ist.

3. Einheit nach Anspruch 2, **dadurch gekennzeichnet, dass**
die in die Nut (31) des Adaptionsrings (6) einführbare Adaptionsschale (7) vertikal verschwenkbar ist und eine arretierbare untere Begrenzung des Schwenkbereichs (34a) aufweist, welche ein Ausklappen der Adaptionsschale aus der Nut oder eine Spitzenbelastung dieser verhindert.

4. Einheit nach einem der Ansprüche 1-3, **dadurch gekennzeichnet, dass**
eine endseitig an einem Rahmensegment (1) befestigte Adaptionsschale (7, 8) mittels einer arretierbaren Rohr-in-Rohr Ausführung teleskopierbar ist oder mindestens ein Rahmensegment (1) einen dreh- oder längenverstellbaren Rohrversatz (9) aufweist.

5. Einheit nach einem der Ansprüche 1-4, **dadurch gekennzeichnet, dass**
der mindestens eine am Rollstuhl befestigbare Adaptionsring (6) als zweiteiliger Klemmring ausgeführt ist.

6. Einheit nach einem der Ansprüche 1-5, **dadurch gekennzeichnet, dass**
die in die Nut (31) des Adaptionsrings (6) einführbare Adaptionsschale (7) eine Haltevorrichtung (28), insbesondere einen Haken, Magneten oder eine Federstahllasche, ausweist, mittels derer die Adaptionsschale (7) in der Nut (31) entgegen der Einführrichtung fixiert werden kann.

7. Einheit nach Anspruch 1, **dadurch gekennzeichnet, dass**
die zwei Rahmensegmente (1) über mindestens ein Drehgelenk (3) mit dem Steuerrohr (2) verbunden sind und mittels eines Schermechanismus (17) in der Breite symmetrisch zum Steuerrohr (2) verstell- oder arretierbar sind.

8. Einheit nach Anspruch 7, **dadurch gekennzeichnet, dass**
der Schermechanismus (17) zwei an den Rahmensegmenten (1) drehbar befestigte Arme enthält, welche mittig auf einer am Steuerrohr (2) befestigten Schiene (18) zusammengeführt sind und auf dieser im Wesentlichen spielfrei geführt sind oder mittels einstellbarem Rasthalter (18a) in Funktionsposition arretiert werden können

9. Einheit nach einem der Ansprüche 1-8, **dadurch gekennzeichnet, dass**
ein im Steuerrohr (2) geführter Gabelschaft einer Radgabel (4) mittels eines klemmbaren Lenkervorbaus (14) oder eines Gewindesteuersatzes im Steuerrohr (2) drehbar gehalten wird, wobei insbesondere der Drehwiderstand durch eine weitere Klemmvorrichtung (14,20) mit einem Reibring (21) einstellbar ist.

10. Einheit nach Anspruch 9, **dadurch gekennzeichnet, dass**
die im Steuerrohr (2) geführte Radgabel (4) und somit das an ihr befestigte Rad (5) über einen Einhandlenker (13), der im Wesentlichen aus einem Rohr und einem endseitigen Griff besteht, zu lenken oder bremsen ist, wobei der Einhandlenker (13) insbesondere eine Verstellmöglichkeit in der Höhe, Länge oder im Griffwinkel ausweist.

11. Einheit nach einem der Ansprüche 1-10, **dadurch gekennzeichnet, dass**
beim Vorsatzrad im an den Rollstuhl befestigten Zustand (Fig.10 unten) zwischen dem Radaufstandspunkt eines in der Radgabel (4) eingebauten Rades (5) und dem durch den Winkel des Steuerrohrs (2) festgelegtem Spurpunkt ein positiver Nachlauf entsteht und das Laufrad somit der Lenkungsdrehachse in Fahrtrichtung nachläuft.

12. Einheit nach einem der Ansprüche 1-11, **dadurch gekennzeichnet, dass**
der Spannmechanismus (11) über ein Spannelement insbesondere mit einer Oberfläche aus oberflächenschonendem Material wie Polypropylen, Polyester, Nylon verfügt, um dieses um ein Teil des Rollstuhls zu legen, am Rollstuhl oder einem Teil der Einheit endseitig zu befestigen und so die Adaptionsschale an das Rollstuhlvorderrohr zu spannen.

13. Einheit nach einem der Ansprüche 9-10, **dadurch gekennzeichnet, dass**
der Lenkervorbau (14) einen Lenkanschlag (24) oder eine Klemmung am Gabelschaft aufweist, welche zur Arretierung des Lenkers zur Radgabel (4) sowie in Verbindung mit einer Feder als Mittel zum selbständigen zurückführen des Rades (5) in die Geradeausstellung verwendet werden kann.

14. Einheit nach Anspruch 1 oder 5, **dadurch gekennzeichnet, dass**
der mindestens eine Teil des zweiteilig ausgeführten Klemmrings eine an die Form der Adaptionsschale (7) angepasste Nut (31) aufweist.

15. Einheit nach Anspruch 1 oder 7, **dadurch gekennzeichnet, dass** das, die
Rahmensegmente führende Drehgelenk (3) aus mindestens einem am Steuerrohr (2) befestigtem ringförmigen Metallteil besteht.
